# EUROPEAN PATENT APPLICATION

(11) **EP 2 611 265 A2**
(43) Date of publication of application: **03.07.2013**
(21) Application number: 12275032.6
(22) Date of filing: 30.03.2012
(51) Int. Cl.: H05B 33/08

(54) **Driving apparatus for light emitting diode**

(30) Priority: 26.12.2011 KR 20110141938
(71) Applicant: Samsung Electro-Mechanics Co., Ltd., Gyunggi-do (KR)
(72) Inventor: Lee, Yeun Joong, Gyunggi-do (KR); Park, Deuk Hee, Gyunggi-do (KR); Lee, Jae Shin, Gyunggi-do (KR); Cha, Sang Hyun, Gyunggi-do (KR); Lee, Chang Seok, Gyunggi-do (KR)
(74) Representative: Powell, Timothy John

(57) **Abstract**

There is provided a driving apparatus for a light emitting diode (LED) comparing a rectified power voltage level with an LED current to limit current applied to an LED, thereby reducing the amount of heat generated therein. The driving apparatus for an LED includes a detecting unit detecting a voltage level of rectified power; and a driving unit comparing a level of current flowing in an LED unit having at least one LED with detection results from the detecting unit, and limiting current applied to the LED unit to drive the LED unit according to comparison results.

## Description

### CROSS-REFERENCE TO RELATED APPLICATIONS

This application claims the priority of Korean Patent Application No. 10-2011-0141938 filed on December 26, 2011, in the Korean Intellectual Property Office, the disclosure of which is incorporated herein by reference.

### BACKGROUND OF THE INVENTION

### Field of the Invention

The present invention relates to a driving apparatus for a light emitting diode capable of reducing heat generated in a switch supplying or cutting-off power supplied to a light emitting diode.

### Description of the Related Art

Recently, interest in, and demand for, light emitting diodes (LEDs) have increased.

Devices using LEDs can be manufactured to be compact, and thus, these devices can be used in spaces in which existing electronic products cannot easily be accommodated. Further, when LEDs are used in general lighting devices, they may produce various colors of light and facilitate illumination level control, such that LEDs can be used in lighting systems for creating lighting conditions suitable for watching movies, conferencing, reading, or the like.

Further, LED power consumption is about 1/8 that of a conventional incandescent lamp, and the lifespan thereof may be approximately 50, 000 to 100, 000 hours, that is, 5 to 10 times longer than the lifespan of a conventional incandescent lamp, and LEDs are also environmentally-friendly due to being a mercury-free light source, and can be variously designed.

Due to the above-mentioned characteristics of LEDs, many countries, such as Korea, the USA, Japan and Australia, have promoted the development of LED lighting devices as national projects.

Recently, with the development of flat panel display technology, flat panel displays have been used in vehicle dashboards, in addition to having applications in smart phones, game machines, digital cameras, and the like. In the future, flat panel displays are expected to be widely used in daily life, such as in devices such as ultra-slim televisions, transparent navigation devices, and the like.

In flat panel displays, thin film transistor liquid crystal displays (TFT-LCDs) have mainly been used.

A liquid crystal display (LCD) is a display device capable of controlling images desired to be displayed thereby by individually supplying data signals to pixels arranged in a matrix to control individual pixel light transmittance, according to image information. Since the LCD is not a self-illuminating device, the LCD is designed to have a back-light unit mounted on a back surface thereof so as to display images.

Generally, applications for LCDs have increased due to advantageous characteristics inherent therein, such as lightness, slimness, the ability to be driven at low power, and the like. With the increase in applications for LCDs, LCDs have come to be widely used in office automation apparatuses, audio visual devices, and the like.

As described above, since the LCD is not a self-illuminating device, it requires a separate light source known as a backlight. As the backlight illumination source, cold cathode fluorescent lamps (CCFLs), external electrode fluorescent lamps (EEFLs), or the like, have been used.

Backlight units utilizing LEDs have advantages such as lower power consumption, and a reduced volume in comparison to existing cold cathode fluorescent lamps, and as a result, the use of LEDs in backlights has increased.

Backlights using LEDs may be divided into direct type LED backlights and edge type LED backlights. The direct type LED backlight utilizes a scheme of mounting LED chip modules on an entire surface thereof and directly projecting light to an LCD panel, while the edge type LED backlight utilizes a scheme of only mounting an LED chip module on an edge thereof to project light to a center of the LCD panel.

As described above, the use of LEDs has recently increased, and a driving apparatus for LED is required.

Generally, LEDs are driven by several volts of DC power, in consideration of the structure thereof. Therefore, the LED requires a separate power conversion device, connected to an AC power supply, to be driven thereby.

However, since an AC-DC converter may have a large volume and consume large amounts of power, the advantages of LED use are greatly offset when using the AC-DC converter in conjunction therewith so as to drive the LED using AC power.

That is, since LEDs use a DC power supply, a switching mode power supply (SMPS) should be used for converting commercial AC power into DC power and obtaining a voltage magnitude suitable for general lighting. In the case of using the SMPS scheme, electrical efficiency is increased, but a circuit required therefor may be complicated. Furthermore, high frequency noise may occur due to the use of a switching mode, SMPS module lifespan may be degraded due to the use of a capacitor and an inductor, and a power factor may be reduced.

Further, in another scheme, a current control-type LED driving circuit using a switching regulator has been used. The driving circuit using the switching regulator has a structure for controlling current flowing into the LED through a switching type circuit and an operational amplifier and feeds back voltage applied to a sensing resistor to control current flowing in the LED. This scheme uses a switching scheme rather than a linear scheme, and therefore, power consumption in a switching block may be reduced to thereby increase electrical efficiency. Thus, this scheme has been widely used in a case in which a relatively large amount of power is consumed. However, the current control-type LED driving circuit has a complicated structure, due to the use of the switching regulator therein, and requires an inductor, a capacitor, or the like, thereby reducing electrical lifespan and degrading efficiency when a circuit is incorrectly designed.

Therefore, Patent Document 1 discloses that when a driving apparatus for an LED according to the related art converts AC power into DC power, a circuit for providing the DC power is complicated, and therefore, technology for driving an LED using rectified power has been developed. However, a great amount of heat may be generated in a constant current source due to a voltage drop in the LED and power loss may also be problematic.

### [Related Art Document]

### (Patent Document 1) Korean Patent No. 0942234

### SUMMARY OF THE INVENTION

An aspect of the present invention provides a driving apparatus for a light emitting diode (LED) capable of limiting current applied to the LED by comparing a rectified power voltage level with an LED current, thereby reducing an amount of heat generated in the LED. Furthermore, the driving apparatus for an LED allows for a reduction in manufacturing costs by only adopting a single switch for switching power supplied to the LED.

According to an aspect of the present invention, there is provided a driving apparatus for an LED, including: a detecting unit detecting a voltage level of rectified power; and a driving unit comparing a level of current flowing in an LED unit having at least one LED with detection results from the detecting unit, and limiting current applied to the LED unit to drive the LED unit according to comparison results.

The detecting unit may detect an average voltage level of the rectified power.

The detecting unit may reduce the voltage level of the rectified power and detect the reduced voltage level.

The driving unit may include a switch disposed between a terminal of the LED unit and a ground to allow current flowing to the LED unit to be supplied or cut according to a switching control signal; a comparator comparing the level of current flowing in the LED unit with the detection results from the detecting unit to provide the comparison results; an RS latch performing a logic operation with respect to the comparison results from the comparator and a preset clock signal to provide the switching control signal controlling a switching operation of the switch; and a current detector detecting the level of current flowing in the LED unit.

The driving unit may further include an oscillator providing the clock signal.

The driving unit may further include a buffer buffering the switching control signal.

The driving unit may further include a power generator generating internal power based on the voltage level detected by the detecting unit.

According to another aspect of the present invention, there is provided a driving apparatus for an LED, including: a rectifying unit rectifying AC power; a detecting unit detecting an average voltage level of the rectified power from the rectifying unit; and a driving unit comparing a level of current flowing in an LED unit having at least one LED with detection results from the detecting unit, and limiting current applied to the LED unit to drive the LED unit according to comparison results.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a view schematically showing a configuration of a driving apparatus for a light emitting diode (LED) according to an embodiment of the present invention; and
FIG. 2 is a graph showing a current limit by a driving apparatus for a light emitting diode according to an embodiment of the present invention.

### DETAILED DESCRIPTION OF THE INVENTION

Hereinafter, embodiments of the present invention will be described in detail with reference to the accompanying drawings so that they can be easily practiced by those skilled in the art to which the present invention pertains.

However, detailed descriptions related to well-known functions or configurations will be ruled out in order not to unnecessarily obscure subject matters of the present invention.

In addition, like reference numerals will be used to describe elements having the same or similar functions throughout the accompanying drawings.

Throughout this specification, it will be understood that when an element is referred to as being "connected to" another element, it can be directly connected to the other element or may be indirectly connected to the other element with element(s) interposed therebetween.

In addition, unless explicitly described to the contrary, the word "comprise" and variations such as "comprises" or "comprising," will be understood to imply the inclusion of stated elements but not the exclusion of any other elements.

Embodiments of the present invention will now be described in detail with reference to the accompanying drawings.

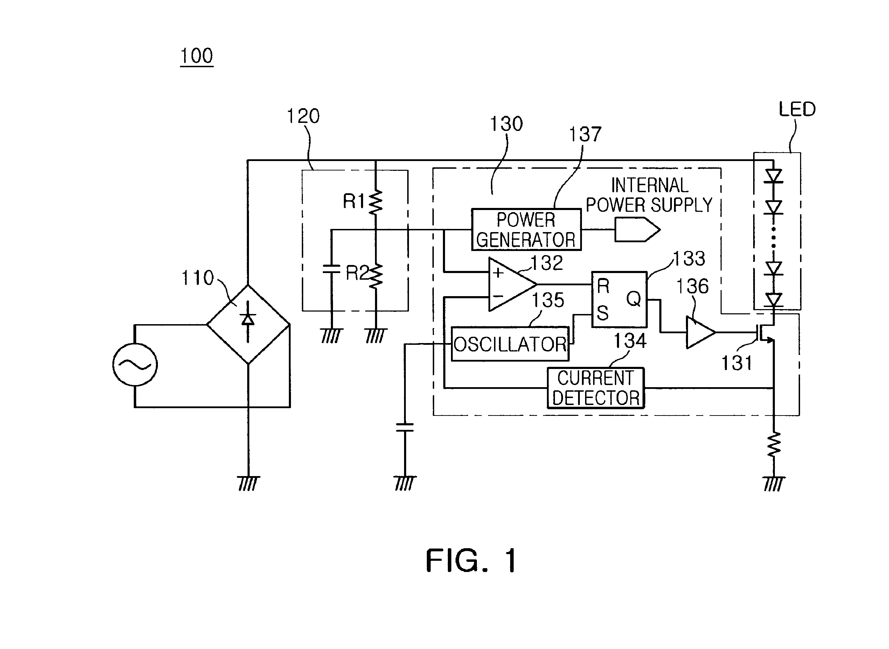

FIG. 1 is a view schematically showing a configuration of a driving apparatus for a light emitting diode (LED) according to an embodiment of the present invention.

Referring to FIG. 1, a driving apparatus 100 for an LED according to an embodiment of the present invention may include a rectifying unit 110, a detecting unit 120, and a driving unit 130.

The rectifying unit 110 may rectify input AC power and supply the rectified AC power to the detecting unit 120 and the LED unit. The rectified power may be half-wave rectified or full-wave rectified. To this end, the rectifying unit 110 may include a bridge diode.

In this configuration, the LED unit may include at least one LED or a group of LEDs in which a plurality of LEDs are connected to one another in series.

The detecting unit 120 may detect a voltage level of power rectified by the rectifying unit 110 and detect an average voltage level of the rectified power. In addition, the detecting unit 120 may also reduce the voltage level of the rectified power and detect the reduced voltage level.

To this end, the detecting unit 120 may include at least two resistors R1 and R2 connected to each other in series between a rectifying power terminal to which the power rectified by the rectifying unit 110 is applied and a ground.

The voltage level of power rectified according to a ratio of resistance values between the first and second resistors R1 and R2 of the detecting unit 120 may be reduced and detected. A connection node between the first resistor R1 and the second resistor R2 is connected to the driving unit 130 to transfer the detected voltage of the rectified power.

The driving unit 130 may control the supplying or cutting-off of the rectified power applied to the LED unit to thereby control the driving of the LED unit.

To this end, the driving unit 130 may include a switch 131, a comparator 132, an RS latch 133, a current detector 134, an oscillator 135, a buffer 136, and a power generator 137.

The switch 131 may be disposed between a terminal of the LED unit and the ground and may be turned on or off according to a switching control signal.

A transfer path of current flowing to the ground through the LED unit by the turning the switch on or off according to the switching control signal may be opened or closed, such that an operation of the LED unit is controlled by the rectified power.

The detected voltage from the detecting unit 120 and the current flowing in the LED unit are fed back to the comparator 132. Accordingly, the comparator 132 may compare the detected voltage with the current.

That is, the comparator 132 may compare the detected voltage with a detection signal detecting the feedback current by voltage and may transfer the comparison results to the RS latch 133.

To this end, the comparator 132 may be configured of an OP amplifier and may include a positive terminal to which the detected voltage is applied from the detecting unit 120 and a negative terminal to which the current flowing in the LED unit is fed back.

The RS latch 133 may include a set terminal S, a reset terminal R, and an output terminal Q, and may perform a logic operation by inputting a clock signal having a preset frequency to the set terminal S and inputting the comparison results from the comparator 132 to the reset terminal R.

When signals input to the set terminal S and the reset terminal R have a low level, there is no change in the signals output to the output terminal Q of the RS latch 133, and thus a previous output state is maintained. This may be referred to as an inactive state.

However, when a low level signal is input to the reset terminal R and a high level signal is input to the set terminal S, the output terminal Q may be set to output the high level signal. On the contrary, a high level signal is input to the reset terminal R and a low level signal is input to the set terminal S, the output terminal Q may be set to output the low level signal.

As described above, the RS latch 133 may output the switching control signal controlling the switching of the switch 131 through the output terminal Q according to the clock signal input to the set terminal S thereof and a high level state or a low level state of the comparison results from the comparator 132 input the reset terminal R thereof.

The switching control signal may have a high level or a low level according to the logic operation result of the RS latch 133, and the switch 131 may be turned on or off according to the signal level of the switching control signal.

For example, when the switching control signal has a high level, the switch 131 is turned on to apply current to the LED unit, such that the LED unit may emit light. Further, when the switching control signal has a low level, the switch 131 is turned off to cut the current flowing in the LED unit, such that the LED unit may stop emitting light.

The current detector 134 may detect a level of the current flowing in the LED unit and may transfer the detected current level to the comparator 132.

More specifically, the current detector 134 may detect the level of the current flowing in the LED unit as a voltage value. Further, the current detector 134 may convert the detected voltage value expressed as an analog signal into a digital signal and transfer the converted signal to the comparator 132.

The oscillator 135 may be oscillated to provide a clock signal having a preset frequency to the comparator 132. Although not shown, the oscillator 135 may be configured of various circuits such as an RC oscillation circuit, a crystal oscillation circuit, or the like, so as to provide the clock signal.

The buffer 136 may buffer the switching control signal received from the RS latch 133 and may transfer the buffered switching control signal to the switch 131.

The power generator 137 may generate internal power used in an internal circuit of the driving unit 130, based on the detected voltage from the detecting unit 120, and supply the generated power to a circuit requiring the use thereof.

Meanwhile, the driving unit 130 of the driving apparatus 100 for an LED according to the embodiment of the present invention may limit the current flowing in the LED unit to reduce the amount of heat generated therein. A detailed description thereof will be provided below in detail with reference to the drawings.

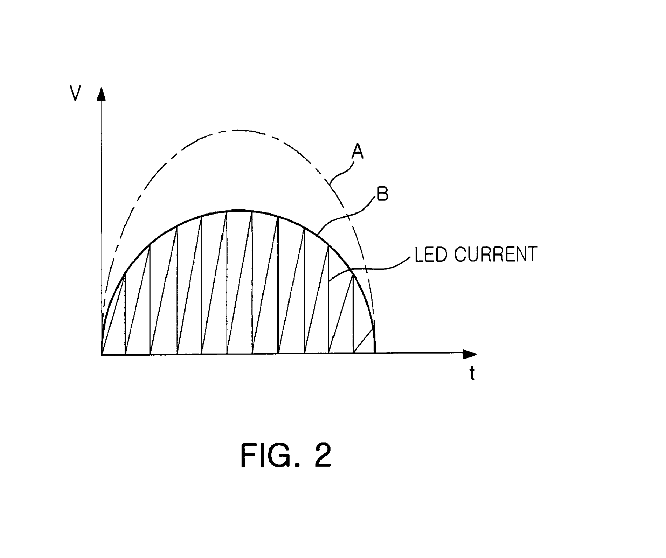

FIG. 2 is a graph showing a current limit by a driving apparatus for an LED according to an embodiment of the present invention.

Referring to FIGS. 1 and 2, the rectifying unit 110 may transfer power rectified therein to the detecting unit 120 and the LED unit, and the detecting unit 120 may detect an average voltage level of the rectified power.

The comparator 132 of the driving unit 130 may compare a voltage value detected from the detecting unit 120 with a current value detected from the current detector 134 to transfer the comparison results to the reset terminal R of the RS latch 133. In this case, the comparison results may be a pulse width modulation (PWM) signal.

The RS latch 133 may receive a clock signal from the oscillator 135 through the set terminal S thereof and may perform a logic operation with respect to a signal level of the PWM signal input to the reset terminal R and a signal level of the clock signal and output the logic operation result through the output terminal Q.

When a switching control signal from the output terminal Q has a high level, the switch 131 is turned on to apply current to the LED unit, such that the current detection value may be slowly increased.

When the increased current detection value is equal to the detected voltage from the detecting unit 120, the level of the PWM signal from the comparator 132 is high and thus, the level of the switching control signal from the output terminal Q of the RS latch 133 is low to thereby turn off the switch 131.

Meanwhile, when the voltage level of the rectified power is increased, the level of the detected voltage is increased, such that a turned-on period of the switch 131 may be relatively long, and a period during which current flows in the LED unit may be accordingly long.

That is, the current flowing in the LED unit may be limited in proportion to the voltage level of the rectified power.

Referring to FIG. 2, it may be appreciated that the current (LED current) B flowing in the LED unit is limited according to the voltage level A of the rectified power.

As set forth above, according to the embodiments of the present invention, current applied to the LED may be limited by comparing the voltage level of the rectified power with the LED current, thereby reducing the amount of heat. In addition, a single switch may be adopted for switching power supplied to the LED, thereby reducing manufacturing costs.

While the present invention has been shown and described in connection with the embodiments, it will be apparent to those skilled in the art that modifications and variations can be made without departing from the spirit and scope of the invention as defined by the appended claims.

## Claims

1. A driving apparatus for a light emitting diode (LED), comprising:
a detecting unit detecting a voltage level of rectified power; and
a driving unit comparing a level of current flowing in an LED unit having at least one LED with detection results from the detecting unit, and limiting current applied to the LED unit to drive the LED unit according to comparison results.

2. The driving apparatus for an LED of claim 1, wherein the detecting unit detects an average voltage level of the rectified power.

3. The driving apparatus for an LED of claim 2, wherein the detecting unit reduces the voltage level of the rectified power and detects the reduced voltage level.

4. The driving apparatus for an LED of claim 1, wherein the driving unit includes:
a switch disposed between a terminal of the LED unit and a ground to allow current flowing to the LED unit to be supplied or cut according to a switching control signal;
a comparator comparing the level of current flowing in the LED unit with the detection results from the detecting unit to provide the comparison results;
an RS latch performing a logic operation with respect to the comparison results from the comparator and a preset clock signal to provide the switching control signal controlling a switching operation of the switch; and
a current detector detecting the level of current flowing in the LED unit.

5. The driving apparatus for an LED of claim 4, wherein the driving unit further includes an oscillator providing the clock signal.

6. The driving apparatus for an LED of claim 4, wherein the driving unit further includes a buffer buffering the switching control signal.

7. The driving apparatus for an LED of claim 4, wherein the driving unit further includes a power generator generating internal power based on the voltage level detected by the detecting unit.

8. A driving apparatus for an LED, comprising:
a rectifying unit rectifying AC power;
a detecting unit detecting an average voltage level of the rectified power from the rectifying unit; and
a driving unit comparing a level of current flowing in an LED unit having at least one LED with detection results from the detecting unit, and limiting current applied to the LED unit to drive the LED unit according to comparison results.

9. The driving apparatus for an LED of claim 8, wherein the detecting unit reduces the voltage level of the rectified power and detects the reduced voltage level.

10. The driving apparatus for an LED of claim 8, wherein the driving unit includes:
a switch disposed between a terminal of the LED unit and a ground to allow current flowing to the LED unit to be supplied or cut according to a switching control signal;
a comparator comparing the level of current flowing in the LED unit with the detection results from the detecting unit to provide the comparison results;
an RS latch performing a logic operation with respect to the comparison results from the comparator and a preset clock signal to provide the switching control signal controlling a switching operation of the switch; and
a current detector detecting the level of current flowing in the LED unit.

11. The driving apparatus for an LED of claim 10, wherein the driving unit further includes an oscillator providing the clock signal.

12. The driving apparatus for an LED of claim 10, wherein the driving unit further includes a buffer buffering the switching control signal.

13. The driving apparatus for an LED of claim 10, wherein the driving unit further includes a power generator generating internal power based on the voltage level detected by the detecting unit.
